# EUROPEAN PATENT SPECIFICATION

(11) **EP 3 536 499 B1**
(45) Date of publication and mention of the grant of the patent: **09.09.2020**
(21) Application number: 18181239.7
(22) Date of filing: 02.07.2018
(51) Int. Cl.: B33Y 10/00, B33Y 30/00, B33Y 50/02, B29C 64/124, B29C 64/393

(54) **3D PRINTER CAPABLE OF DYNAMICALLY ADJUSTING PRINTING TIME AND DYNAMICAL PRINTING METHOD OF USING SAME**
3D-DRUCKER ZUR DYNAMISCHEN EINSTELLUNG DER DRUCKZEIT UND DYNAMISCHES DRUCKVERFAHREN DAFÜR
IMPRIMANTE 3D CAPABLE DE RÉGLER DYNAMIQUEMENT LA DURÉE D'IMPRESSION ET PROCÉDÉ D'IMPRESSION DYNAMIQUE L'UTILISANT

(30) Priority: 08.03.2018 CN 201810191150
(43) Date of publication of application: 11.09.2019
(73) Proprietor: XYZprinting, Inc., New Taipei City 22201 (TW); Kinpo Electronics, Inc., New Taipei City 22201 (TW)
(72) Inventor: CHANG, Cheng-Kuan, New Taipei City 22201 (TW)
(74) Representative: 2K Patentanwälte Blasberg Kewitz & Reichel

(56) References cited:
- WO-A1-2016/053303
- WO-A1-2018/017116
- US-B2- 8 845 949

## Description

### BACKGROUND OF THE INVENTION

### 1. Technical Field

The technical field relates to the three-dimensional (3D) printing, and more particularly relates to a 3D printer capable of dynamically adjusting printing time and a dynamical printing method of using the 3D printer. A such 3D printer and printing method are known from US 8 845 949 B2.

### 2. Description of Related Art

3D printers are widely used in recent years due to advancements of technologies, compactness of the 3D printer, and greatly decreased price.

Currently, all types of 3D printer available on the commercial market slice an object in a unit of one layer. That is, a slicing object of a layer is printed in one step. A complete 3D model is created by adding a plurality of slicing objects together.

Taking a digital light processing (DLP) 3D printer as an example, the DLP 3D printer activates an illumination unit to emit light toward liquid material contained in a tank based on the pattern of a cured layer. The lit portions of the liquid material cure and create a slicing object having the corresponding pattern. The 3D printer repeatedly performs above steps to create a 3D model by adding a plurality of slicing objects of the cured layer together.

After the illumination unit emitting light toward liquid material contained in a tank, the lit portions of the liquid material cure and temperature of the unlit portions thereof increases due to the illumination. The higher of the liquid material is, the quicker of the reaction is. In other words, temperature of the liquid material in the tank will increase greatly (i.e., heat being accumulated) if heat generated during the printing process (i.e., the liquid material being continuously illuminated by the illumination unit) is not sufficiently dissipated. And in turn, the reaction rate of the cured layer is different from the predetermined reaction rate thereof. As a result, quality of the created 3D model is adversely affected (i.e., the liquid material being over-cured).

Further, different liquid materials (e.g., different materials, different brands, etc.) have different features. Thus, the different liquid materials may experience different reaction rates even in the same manufacturing temperature. Thus, in an example of a fixed waiting time set by the 3D printer and different liquid materials, qualities of the created 3D models may be varied greatly. Thus, the need for improvement still exists.

### SUMMARY OF THE INVENTION

The disclosure is directed to a 3D printer capable of dynamically adjusting printing time and dynamical printing method of using same in which after the 3D printer creating a slicing object, a waiting time of a next slicing object creation is dynamically adjusted based on the illumination density of the cured layer in order to ensure quality of a 3D model to be created.

It is therefore one object of the invention to provide a 3D printer capable of dynamically adjusting printing time comprising a processor stored with a time table recorded with a plurality of relationships each between an illumination density and a plurality of waiting times wherein the processor obtains slicing information of one of a plurality of cured layers of a 3D object in printing; a tank for storing liquid material; a printing platform disposed above a bottom of the tank and electrically connected to the processor so that the processor is configured to immerse the printing platform in the liquid material; and an illumination unit disposed under the tank and electrically connected to the processor so that the illumination unit is configured to emit light toward inside of the tank and a slicing object of one cured layer is created on the printing platform as controlled by the processor based on the slicing information; wherein the processor calculatesan illumination area of the illumination unit based on the slicing information of the cured layer, calculates an illumination density of the cured layer based on the illumination area and a surface area of the tank, the processor searches the time table to obtain a corresponding one of the waiting times based on the illumination density, after creating the slicing object, the processor waits for the obtained waiting time to lapse, and after the waiting time being lapsed, the processor creates a slicing object of a next one of the cured layers.

It is another object of the invention to provide a dynamical printing method of using a 3D printer including a tank for storing liquid material, a printing platform disposed above a bottom of the tank, an illumination unit disposed under the tank, and a processor connected to the printing platform and the illumination unit, comprising the steps of a) prior to printing, reading a time table recorded with a plurality of relationships each between an illumination density and a plurality of waiting times as controlled by the processor; b) obtaining slicing information of one of a plurality of cured layers of a 3D object in printing as controlled by the processor; c) immersing the printing platform in the liquid material, activating the illumination unit to emit light toward inside of the tank, and creating a slicing object of the cured layer on the printing platform as controlled by the processor based on the slicing information; d) calculating an illumination density of one cured layer based on the slicing information, wherein the processor calculates an illumination area of the illumination unit based on the slicing information of the cured layer, an calculates the illumination density based on the illumination area and a surface area of the tank; e) searching the time table to obtain a corresponding one of the waiting times based on the illumination density; f) after creating the slicing object, causing the processor to wait for the waiting time to lapse; and g) after the waiting time being lapsed, creating a slicing object of a next one of the cured layers by looping back to step b) and performing steps b) to f) as controlled by the processor.

The invention has the following characteristics: After creating a slicing object of a cured layer, the 3D printer waits for a period of time based on the illumination density of the cured layer so that both temperature of the liquid material and reaction rate thereof can be kept at an optimum, and chemical reactions occurred at curing each slicing object are substantially the same or similar in order to ensure quality of a 3D model to be created.

The above and other objects, features and advantages of the invention will become apparent from the following detailed description taken with the accompanying drawings.

### BRIEF DESCRIPTION OF THE DRAWINGS

FIG. 1 is a side elevation in part section of a 3D printer according to a first preferred embodiment of the invention;
FIG. 2 is a block diagram of the 3D printer;
FIG. 3 illustrates dynamical printing according to an embodiment of the invention;
FIG. 4A is a flowchart illustrating a first dynamical printing method according to an embodiment of the invention using the 3D printer of the first preferred embodiment;
FIG. 4B is a flowchart illustrating a second dynamical printing method according to an embodiment of the invention using the 3D printer of the first preferred embodiment;
FIG. 5 is a flowchart illustrating a time table generation method to be used in the invention using the 3D printer of the first preferred embodiment; and
FIG. 6 is a side elevation in part section of a 3D printer according to a second preferred embodiment of the invention.

### DETAILED DESCRIPTION OF THE INVENTION

Embodiments of the invention will now be described, by way of example only, with reference to the accompanying drawings.

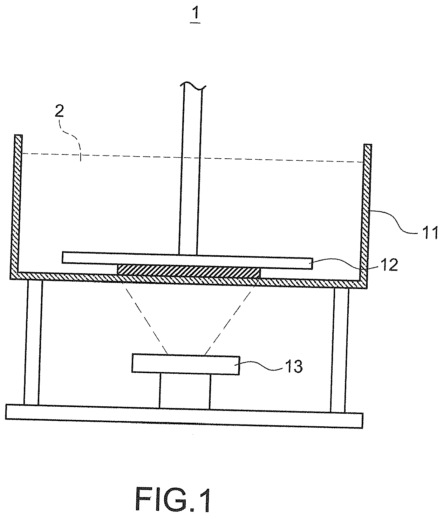

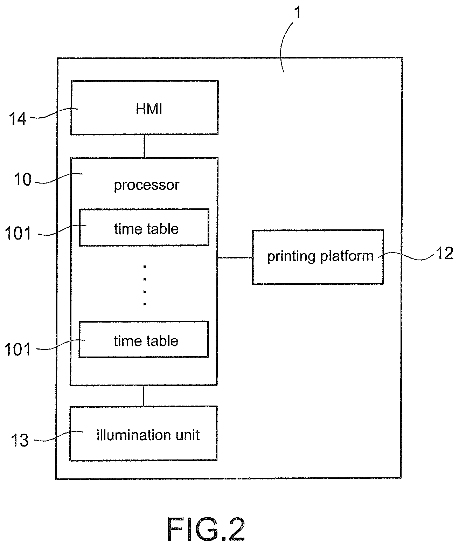

Referring to FIGS. 1 and 2 in which FIG. 1 is a side elevation in part section of a 3D printer 1 according to a first preferred embodiment of the invention, and FIG. 2 is a block diagram of the 3D printer respectively. The 3D printer 1 is capable of dynamically adjusting printing time. In FIGS. 1 and 2, the 3D printer 1 is implemented as a digital light processing (DLP) 3D printer or a stereolithography (STL) 3D printer. The invention aims at dynamically adjusting printing time of the 3D printer 1 to prevent heat from accumulating in creating a 3D object by adding liquid material (e.g., liquid molecules) together or fusing solid material (e.g., powder grains) together. Otherwise, quality of the 3D object may be adversely affected. It is envisaged by the invention that printers other than above are within the scope of the invention if they generate heat in printing.

Either a DLP 3D printer or an STL 3D printer is taken as an exemplary example in discussing the invention in FIGS. 1 and 2 for the sake of description.

In the first embodiment of FIGS. 1 and 2, the 3D printer 1 comprises a tank 11 for storing liquid material 2, a printing platform 12 disposed above a bottom of the tank 11, an illumination unit 13 disposed under the tank 11, and a processor 10 electrically connected to the printing platform 12, and the illumination unit 13.

In printing, the processor 10 lowers the printing platform 12 and immerses same in the liquid material 2 to dispose above the bottom of the tank 11 at a distance defined as a thickness of the cured layer. 1. The processor 10 controls the illumination unit 13 to emit light into the tank 11, the lit portions of the liquid material 2 in the tank 11 cure and adhere to the printing platform 12 to create a slicing object of the cured layer. The platform 12 and the illumination unit 13 repeatedly perform above printing steps as controlled by the processor 10. As a result, a 3D model is created by adding slicing objects of a plurality of cured layers together.

In the embodiment, the processor 10 stores one or more time tables 101 each recorded with relationships each between an illumination density and waiting times.

Prior to printing, a user may operate an externally disposed computer or activate the 3D printer 1 to instruct the processor 10 to read a 3D file, open a 3D object recorded in the 3D file, convert the 3D object into a series of thin layers, and produce slicing information of a plurality of cured layers (or called printing layers), i.e., slicing processing. The slicing processing is known in the art of 3D printing and thus a detailed description thereof is omitted herein for the sake of brevity.

During the 3D printing process, the processor 10 obtains the slicing information of one of the cured layers (e.g., the first layer) of the 3D object. Next, the processor 10 lowers the printing platform 12 (i.e., along Z-axis of the 3D printer 1) until the printing platform 12 is immersed in the liquid material 2 and disposed above the bottom of the tank 11. In this position, a distance between the printing platform 12 and the bottom of the tank 11 is defined as a thickness of the cured layer. The thickness of the cured layer is equal to (or near) a predetermined thickness of curing but not limiting.

Next, the processor 10 activates the illumination unit 13 to emit light into the tank 11 based on the obtained slicing information. Specifically, the illumination unit 13 emits light toward the printing platform 12 through the underside of the tank 11 as instructed by the processor 10. Also, light emitted by the illumination unit 13 emits a shape of the slicing object indicated by the slicing information. Thus, the lit portions of the liquid material 2 cure and adhere to the printing platform 12 to create a slicing object (not numbered) of the cured layer.

One aspect of the invention is described below. For preventing heat generated by the light from accumulating in the liquid material 2 in the tank 11 during the printing process, the 3D printer 1 intermittently sequentially creates slicing objects of the cured layers.

Specifically, after creating the slicing object of the cured layer (i.e., being cured), the processor 10 calculates an illumination density of the cured layer based on the slicing information, and further searches a desired time table 101 to obtain a corresponding waiting time based on the illumination density.

The processor 10 calculates an illumination area of the illumination unit 13 based on the slicing information, and calculates an illumination density based on the illumination area and a surface area of the tank 11 (mainly the area of the bottom of the tank 11). In an embodiment, the waiting time of the 3D printer 1 is defined as the time between after creating a cured layer and beginning a next cured layer creation. In the invention, the purpose of the waiting time of the 3D printer 1 is to allow the illuminated liquid material 2 in the tank 11 to sufficiently dissipate in order to prevent heat from being accumulated.

In an embodiment, after the waiting time of the 3D printer 1 being lapsed, temperature of the liquid material 2 in the tank 11 returns to the initial temperature. In another embodiment, after the waiting time of the 3D printer 1 being lapsed, temperature of the liquid material 2 in the tank 11 returns to a set temperature which is slighter higher than the initial temperature.

After obtaining the waiting time, the processor 10 instructs the 3D printer 1 to wait. After the waiting time being lapsed, the processor 10 begins to create a slicing object of a next cured layer (e.g., a second layer). It is envisaged by the invention that by causing the 3D printer 1 to wait a period of time prior to a next printing step, it is possible of ensuring the temperature of the liquid material 2 in the tank 11 to be equal to (or near) the initial temperature when printing a slicing object of each cured layer. As a result, quality of the created 3D model is greatly improved.

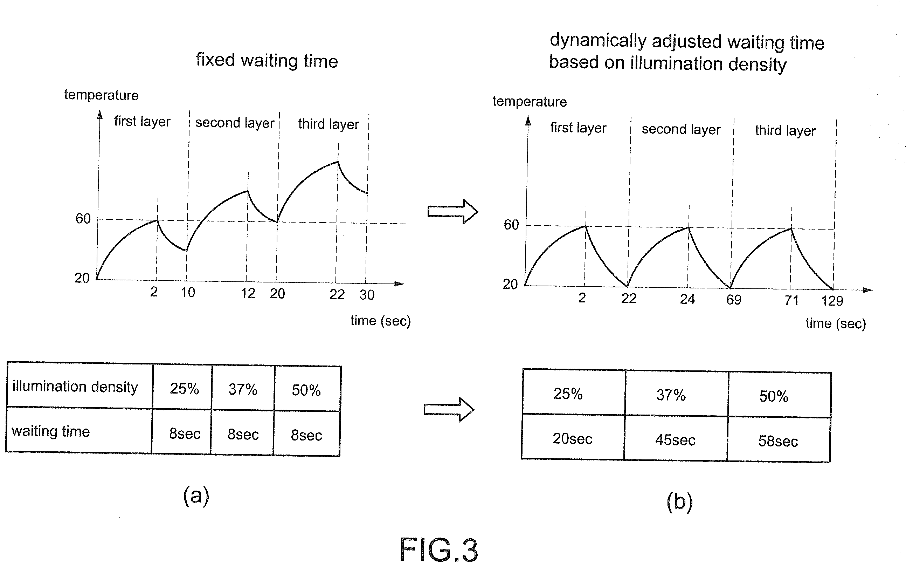

Referring to FIG. 3, it illustrates dynamical printing according to an embodiment of the invention.

As shown in a first configuration in the left (a) of FIG. 3, after creating the slicing object of each cured layer, the 3D printer waits a fixed period of time (e.g., 8 seconds) with a fixed illumination time (e.g., 2 seconds).

As shown in the first configuration in the left (a) of FIG. 3, the illumination density of the first layer is 25% (i.e., a ratio of the illumination area of the illumination unit to the surface area of the tank being 25%), the initial temperature of the liquid material is 20°C, and after the illumination unit emitting light toward the tank and waiting for 2 seconds, the temperature of the liquid material rises from 20°C to 60°C (i.e., overheated). After creating the slicing object of the first layer, the 3D printer waits for 8 seconds, and the temperature of the liquid material gradually decreases during the eight-second period. However, the 3D printer starts to create the slicing object of a second layer before the temperature of the liquid material returning to the initial temperature (20°C). After creating the slicing object of the second layer, the 3D printer still waits for 8 seconds even the illumination density (37.5%) of the second layer is greater than that of the first layer. Thus, the temperature of the liquid material rises again due to heat accumulation.

Likewise, after 8 seconds being lapsed, the 3D printer creates the slicing object of a third layer. After creating the slicing object of the third layer, the 3D printer still waits for 8 seconds even the illumination density (50%) of the third layer is greater than that of the first layer or the second layer. The temperature of the liquid material continues to rise during the printing process. As such, the reaction speed of the liquid material accelerates due to the high temperature. However, the created slicing objects may be over-cured to different extents, thereby adversely affecting quality of the created 3D model.

As shown in a second configuration in the right (b) of FIG. 3, after creating the slicing object of each cured layer, the 3D printer dynamically adjusts the waiting time based on the illumination density of each cured layer. Thus, it is possible of solving the problem of heat accumulation.

Specifically, after creating the slicing object of the first layer having a predetermined illumination time of 2 seconds, the temperature of the liquid material rises from 20°C to 60°C. After creating the slicing object of the first layer, the 3D printer may dynamically adjust the waiting time (e.g., 20 seconds) based on the illumination density (e.g., 25%) of the first layer as shown in the right (b) of FIG. 3. Further, the 3D printer waits a period of time equal to the waiting time. At the end of the waiting time, the temperature of the liquid material returns to the initial temperature 20°C as shown in the right (b) of FIG. 3.

After the waiting time being lapsed, the 3D printer creates the slicing object of the second layer. After creating the slicing object of the second layer having a predetermined illumination time of 2 seconds, the 3D printer may dynamically adjust the waiting time (e.g., 45 seconds) based on the illumination density (e.g., 37%) of the second layer as shown in the right (b) of FIG. 3. Further, the 3D printer waits a period of time equal to the waiting time. At the end of the waiting time, the temperature of the liquid material returns to the initial temperature and so on.

In view of above, it is understood that the greater the illumination density of the illumination unit 13 is, the quicker the temperature of the liquid material in the tank 11 rises. Thus, the waiting time is prolonged. In an embodiment, the processor 10 of the 3D printer 1 searches the time table 101 based on the illumination density, thereby obtaining a variable waiting time. Details of an exemplary time table 101 are shown in the following table I.

**Table I**

| Liquid material A and thickness of cured layer is 0.1mm | | | | |
|---|---|---|---|---|
| Current temperature (°C) | <25 | 25-35 | 35-45 | >45 |
| Illumination density (%) | Waiting time (second) | | | |
| 0-12.5 | 5 | 10 | 15 | 20 |
| 12.5-25 | 20 | 25 | 30 | 35 |
| 25-37.5 | 45 | 50 | 55 | 60 |
| 37.5-50 | 58 | 63 | 68 | 73 |

As shown in Table I, after calculating illumination density of a cured layer, the processor 10 searches the time table 101 to obtain a corresponding waiting time based on the illumination density.

In another embodiment, the processor 10 searches a plurality of time tables 101 in which each time table 101 is recorded with relationships each between an illumination density and corresponding waiting times in different conditions. In other words, for further improving quality of a created 3D model, the processor 10 is required to search different time tables 101 in different conditions.

Specifically, time for increasing temperature of the liquid material 2 and time for decreasing temperature thereof are different due to different initial temperatures of the liquid material 2, different kinds of the liquid material 2, and different thicknesses of the cured layer. Thus, after creating one cured layer, the waiting time of the 3D printer 1 prior to a next cured layer creation may be different from any previous waiting time. In the embodiment, a manufacturer of the 3D printer 1 may establish a plurality of time tables 101.

For example, the Table I corresponds to a time table 101 having conditions of "liquid material A, thickness of cured layer being 0.1mm". In other embodiments, the 3D printer 1 may store a second time table having conditions of "liquid material A, thickness of cured layer being 0.2mm" and a third time table having conditions of "liquid material B, thickness of cured layer being 0.1mm" in a non-limiting manner.

Prior to printing, the processor 10 of the 3D printer 1 obtains the current temperature and a printing parameter, and reads a corresponding one of the plurality of stored time tables 101 according to the current temperature and the printing parameter. In one embodiment, the current temperature may be the internal temperature of the 3D printer 1. Specifically, at least one temperature sensor is provided in any commercially available 3D printers. The temperature sensor is adapted to measure temperature inside a 3D printer or temperature of components of the 3D printer. Prior to printing, internal temperature of the 3D printer is near the ambient temperature or temperature of the liquid material 2. In the embodiment, the internal temperature of the 3D printer 1 is taken as the initial temperature of the liquid material 2. Therefore, additional temperature sensor for measuring temperature of the liquid material 2 is not required by the 3D printer 1. As a result, the manufacturing cost of the 3D printer 1 is greatly decreased.

As shown in FIG. 2, in an embodiment the 3D printer 1 further comprises a Human Machine Interface (HMI) 14 electrically connected to the processor 10. In the embodiment, a user may use an external thermometer (not shown) to measure the current temperature (e.g., ambient temperature or temperature of the liquid material). The measured current temperature can be sent to the 3D printer 1 by using the HMI (e.g., keyboard, touch panel, or wireless transmitting module) 14. Thus, the processor 10 of the 3D printer 1 takes the measured temperature as the initial temperature of the liquid material 2.

It is noted that the processor 10 of the 3D printer 1 can receive above printing parameter input by a user via the HMI 14. Thus, the processor 10 can read an appropriate time table 101 based on the current temperature and the printing parameter. In an embodiment, the printing parameter is a kind of the liquid material 2 or a thickness of a plurality of cured layers in a non-limiting manner.

In addition to the current temperature and the printing parameter discussed above, conditions of the 3D printer 1 itself also affect the length of the waiting time. The processor 10 of the 3D printer 1 may receive machine parameters input by a user via the HMI 14. Thus, the processor 10 can read an appropriate time table 101 based on the current temperature, the printing parameter and the machine parameters.

In an embodiment, the machine parameters include an illumination approach taken by the illumination unit 13 of the 3D printer 1, power of the illumination unit 13, and capacity of the tank 11. The illumination approach of the illumination unit 13 is a point-light illumination, an area-light illumination, or the like in a non-limiting manner.

As described above, the greater the number of the reference conditions are (e.g., the initial temperature of the liquid material 2, the kinds of the liquid material 2, thickness of cured layer, the illumination approach of the illumination unit 13, and the power of the illumination unit 13), the more precise of information contained in the time table 101 is. In such a manner, the 3D printer 1 of the invention is still capable of dynamically deciding printing time (including waiting time after printing) of each cured layer even a temperature sensor for measuring temperature of the liquid material 2 is not provided in the 3D printer 1. As an end, the invention can greatly improve quality of created 3D model due to quick, sufficient dissipation of the accumulated heat.

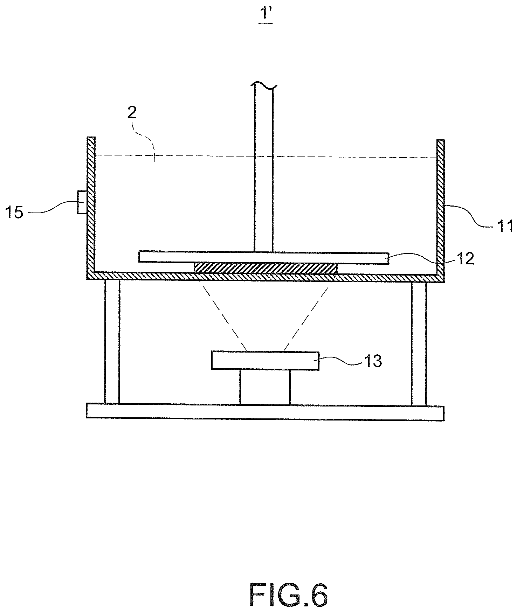

Referring to FIG. 6, it is a side elevation in part section of a 3D printer according to a second preferred embodiment of the invention. The 3D printer is labeled 1'. In comparison with the 3D printer 1 of FIG. 1, the 3D printer 1' further comprises a heat sink 15 provided on an outer surface of a tank 11 and electrically connected to the processor 10. As shown in the second preferred embodiment of FIG. 6, the heat sink 15 is implemented as a pin fin heat sink and adhered to the outer surface of the tank 11. In other embodiments, the heat sink 15 is implemented as a fan disposed above the tank 11, a condenser disposed either internally or externally of the tank 11, or a combination of above and not limiting.

As discussed above, it is envisaged by the technical solutions of the invention, after creating a slicing object of a cured layer, the 3D printer 1 waits a period of time (i.e., waiting temperature of the liquid material 2 to decrease) prior to creating the slicing object of a next cured layer. By utilizing the 3D printer 1' having the heat sink 15, temperature rise of the liquid material 2 in creating the slicing object of a cured layer is relatively small and the liquid material 2 may quickly dissipate heat to decrease its temperature thereafter. As a result, cooling time is decreased (i.e., the waiting time being shortened). In the embodiment, prior to activating the 3D printer 1' to print, the processor 10 may activate the heat sink 15. Next, the step of creating a slicing object is performed. As a result, the waiting time is greatly decreased.

As described above, each time table 101 respectively records relationships each between an illumination density and waiting times in different conditions. Taking the 3D printer 1' of FIG. 6 as an example, capability of heat dissipation of the heat sink 15 should be taken into consideration in establishing the time table 101. In other words, both a time table 101 and waiting time of the 3D printer 1 of FIG. 1 are different from that of the 3D printer 1' of FIG. 6 even at the same illumination density. Taking the same illumination density as an example, the 3D printer 1' having the heat sink 15 has a shorter waiting time.

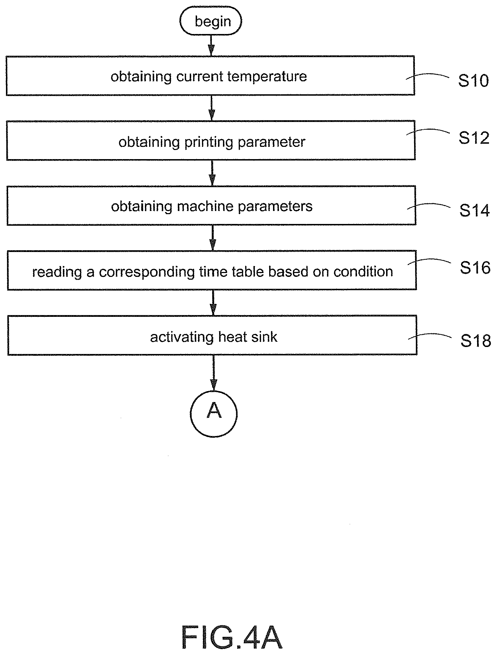

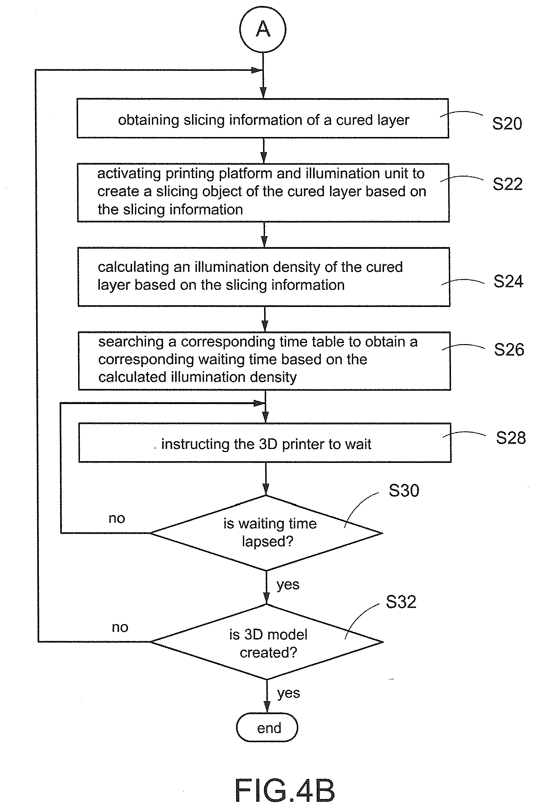

Referring to FIGS. 4A and 4B in which FIG. 4A is a flowchart illustrating a first dynamical printing method according to an embodiment the invention using the 3D printer of the first preferred embodiment, and FIG. 4B is a flowchart illustrating a second dynamical printing method according to an embodiment of the invention using the 3D printer of the first preferred embodiment. The invention further provides a dynamical printing method of using the 3D printer capable of dynamically adjusting printing time (called printing method hereinafter). The printing method is applicable to any 3D printer as long as it generates heat during the printing process. For the sake of discussion, the printing method of the invention will be illustrated in conjunction with the 3D printer 1 shown in FIGS. 1 and 2 but not limiting to the DLP 3D printer or the STL 3D printer.

As shown in FIG. 4A, prior to printing, an initial temperature is sent to the processor 10 of the 3D printer 1 (step S10), a printing parameter is sent to the processor 10 of the 3D printer 1 (step S12), and machine parameters are sent to the processor 10 of the 3D printer 1 (step S14) respectively. And in turn, the processor 10 reads a corresponding one of a plurality of time tables 101 based on the obtained conditions such as the initial temperature, the printing parameter, and the machine parameters (step S16).

In an embodiment, the processor 10 stores only one time table 101. In the embodiment, the processor 10 inquires the exact time table 101 to decide a corresponding waiting time based on the illumination density of each cured layer, it is unnecessary of considering the initial temperature, the printing parameter, and the machine parameters. Thus, the printing method does not perform the steps S10 to S14.

In another embodiment, the printing method of the invention is only applicable to the 3D printer 1 of the same type, i.e., the 3D printers 1 used by the printing method of the invention have the same machine parameters. The processor 10 searches the corresponding one of the time tables 101 based on the current temperature and the printing parameter rather than the machine parameters. Thus, the printing method does not perform the step S14.

As described above, the current temperature is prior to printing, an internal temperature of the 3D printer 1, an ambient temperature of the 3D printer 1, or an initial temperature of the liquid material 2. The printing parameter is either a kind of the liquid material 2 or a thickness of one of cured layers. It is noted that the thickness is a thickness of the slicing object involved in the slicing processing. The thickness of the slicing object is automatically chosen by an external computer or the 3D printer 1, or manually set by a user. This is known in the art of 3D printing and thus a detailed description thereof is omitted herein for the sake of brevity. Further, each of the machine parameters are an illumination approach taken by the illumination unit 13, power of the illumination unit 13, or capacity of the tank 11 in a non-limiting manner.

After step S16, the 3D printer 1 creates a slicing object. In detail, if the 3D printer 1 has the heat sink 15 (e.g., the 3D printer 1' of FIG. 6), the 3D printer 1 instructs the processor 10 to activate the heat sink 15 when begins to create the slicing object (step S18). As such, heat can be quickly dissipated. It is noted that a time table 101 having heat dissipation records is required to obtain if the 3D printer 1 has the heat sink 5.

Subsequently, as shown in FIG. 4B, the processor 10 of the 3D printer 1 obtains slicing information of one of a plurality of cured layers (e.g., a first layer) of a 3D object to be created (step S20). Next, the processor 10 activates both the printing platform 12 and the illumination unit 13 to create a slicing object of the cured layer based on the slicing information (step S22). Specifically, in step S22 the processor 10 lowers the printing platform 12 and immerses same in the liquid material 2 to dispose above the bottom of the tank 11 at a distance defined as a thickness of the cured layer. Further, the processor 10 activates the illumination unit 13 to emit light toward inside of the tank 11. As a result, a slicing object of the cured layer is formed on the printing platform 12 due to the activation of both the printing platform 12 and the illumination unit 13.

After curing the slicing object, the processor 10 further calculates an illumination density of the cured layer based on the slicing information (step S24). In the embodiment, the processor 10 calculates an illumination area of the illumination unit 13 base on the slicing information, and calculates an illumination density based on the illumination area and a surface area of the tank 11. Specifically, the illumination density is obtained by dividing the illumination area by the surface area of the tank 11 and represented in percentage. In the embodiment, the surface area of the tank 11 is mainly the surface area of the tank 11 facing the illumination unit 13 but not limiting.

After step S24, the processor 10 searches a corresponding time table 101 to obtain a corresponding waiting time based on the calculated illumination density (step S26). Next, the processor 10 instructs the 3D printer 1 to wait (step S28), and further determines whether the waiting time is lapsed (step S30). If not, the flowchart loops back to step S28 to instruct the 3D printer 1 to keep waiting.

If the determination in step S30 is yes (i.e., the waiting time being lapsed), the processor 10 further determine whether a 3D model is created (step S32). That is, it is determined whether slicing objects of all cured layers of the 3D object are created. If not, the flowchart loops back to steps S20-S30 to create a slicing object of a next cured layer (e.g., a second layer). Further, after creating the slicing object of a next cured layer, the 3D printer 1 waits a corresponding period of time.

If the determination in step S32 is yes (i.e., the 3D model being created), the printing method of the invention ends successfully.

It is envisaged by the invention that by utilizing the 3D printer 1 and the printing method of the invention, heat accumulation in the liquid material 2 of the tank 11 during the curing process can be avoided, thereby greatly improving quality of the created 3D model.

Specifically, the invention establishes one or more time tables 101 in advance. Prior to printing, a corresponding time table 101 is read based on one or more conditions. In printing, a corresponding time table 101 is searched to obtain a corresponding waiting time based on the illumination area. Thus, the time tables 101 are technological characteristics of the invention.

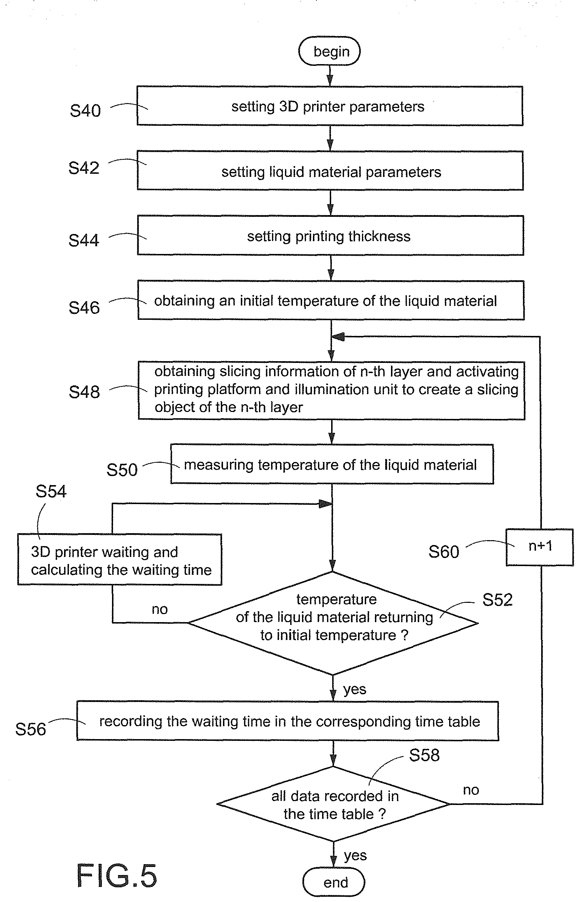

Referring to FIG. 5, it is a flowchart illustrating a time table generation method used in the invention using the 3D printer of the first preferred embodiment. It is noted that the time table 101 is recorded with relationships each between an illumination density and waiting times. Thus, the 3D printer for establishing the time table 101 is required to be aware of the temperature of the liquid material after being illuminated, and know when the liquid material will return to the initial temperature. In other words, the 3D printer for establishing the time table 101, in addition to having the processor 10, the printing platform 12, the illumination unit 13, the tank 11 and the liquid material 2 of FIGS. 1 and 2, is required to have, either directly or indirectly, a temperature sensor for measuring temperature of the liquid material. Thus, the 3D printer for establishing the time table 101 is different from the 3D printer 1 shown in FIGS. 1 and 2. The 3D printer 1 of FIGS. 1 and 2 aims at using the time table 101.

Prior to establishing the time table 101, a user may operate the 3D printer to set 3D printer parameters (step S40), set liquid material parameters (step S42), set printing thickness (step S44), and obtaining an initial temperature of the liquid material by using the temperature sensor (step S46). In an embodiment, the 3D printer parameters include a model of the 3D printer, an illumination approach taken by the illumination unit, power of the illumination unit, and capacity of the takin, etc.. The liquid material parameters include type, compositions and brand of the liquid material. The printing thickness is the thickness of a cured layer created by a computer or set by an employee.

After step S46, the 3D printer obtains slicing information of an n-th layer and activates both the printing platform and the illumination unit to create a slicing object of an n-th layer (step S48). In the embodiment, n in the n-th layer is a positive integer (e.g., 1, 2, 3,...).

After creating the slicing object of the n-th layer, temperature of the liquid material is measured by the temperature sensor and sent to the 3D printer (step S50). Next, it is determined whether the temperature of the liquid material returns to the initial temperature obtained at step S46 (step S52). Prior to the temperature of the liquid material returning to the initial temperature (i.e., the determination being no), the 3D printer continues to wait and calculates the waiting time (step S54); and the flowchart loops back to step S52 to determine whether the temperature of the liquid material returns to the initial temperature obtained at step S46.

If the temperature of the liquid material returns to the initial temperature (i.e., the determination being yes), the 3D printer records the calculated waiting time in the corresponding time table (step S56). In the invention, an employee uses different 3D printer parameters, liquid material parameters and printing thickness to establish different time tables. After performing steps S40-S44, the 3D printer reads a corresponding time table based on the obtained conditions. In step S56, the calculated waiting time is recorded in the corresponding time table.

After step S56, the 3D printer determines whether all data is recorded in the time table (step S58). If no (i.e., not all data being recorded in the time table), the flowchart goes to step S60 to perform n+1 prior to looping back to step S50 to perform cause the temperature sensor to measure the temperature of the liquid material and send same to the 3D printer and subsequent steps including creation of a slicing object of a next layer (e.g., the n+1 layer), and recoding the corresponding waiting time.

If yes (i.e., all data being recorded in the time table), the time table generation method of the invention ends successfully.

It is envisaged by the invention that above method can establish a plurality of time tables, cause the 3D printer to read a corresponding time table based on its conditions, and obtain a dynamically adjusted corresponding waiting time. Therefore, the printing method of the invention is applicable to 3D printers having different conditions.

## Claims

1. A 3D printer (1) capable of dynamically adjusting printing time comprising:
a processor (10) stored with a time table (101) recorded with a plurality of relationships each between an illumination density and a plurality of waiting times, wherein the processor (10) is configured to obtain slicing information of one of a plurality of cured layers of a 3D object in printing;
a tank (11) configured for storing liquid material (2);
a printing platform (12) disposed above a bottom of the tank (11) and electrically connected to the processor (10) so that the processor (10) is configured to immerse the printing platform (12) in the liquid material (2); and
an illumination unit (13) disposed under the tank (11) and electrically connected to the processor (10) so that the illumination unit (13) is configured to emit light toward inside of the tank (11) and a slicing object of one cured layer is created on the printing platform (12) as controlled by the processor (10) based on the slicing information;
wherein the processor (10) is configured to calculate an illumination area of the illumination unit (13) based on the slicing information of the cured layer, calculate an illumination density of the cured layer based on the illumination area and a surface area of the tank (11), search the time table (101) to obtain a corresponding one of the waiting times based on the illumination density, wait for the obtained waiting time to lapse after creating the slicing object of one cured layer, and create a slicing object of a next one of the cured layers after the waiting time being lapsed.

2. The 3D printer (1) as claimed in claim 1, wherein the processor (10) is stored with a plurality of time tables (101) each recorded with the plurality of relationships each between the illumination density and the waiting time in a plurality of different conditions, wherein prior to printing, the processor (10) is configured to obtain a current temperature and a printing parameter, and read one of the time tables (101) based on the current temperature and the printing parameter.

3. The 3D printer (1) as claimed in claim 2, wherein the current temperature is an internal temperature of the 3D printer (1).

4. The 3D printer (1) as claimed in claim 2, further comprising a Human Machine Interface (HMI) (14) electrically connected to the processor (10), wherein the current temperature is sent to the processor (10) by using the HMI (14), and wherein the current temperature is either an ambient temperature or an initial temperature of the liquid material (2).

5. The 3D printer (1) as claimed in claim 2, further comprising a Human Machine Interface (HMI) (14) electrically connected to the processor (10), wherein the printing parameter is sent to the processor (10) by using the HMI (14), and wherein the printing parameter is a kind of the liquid material (2) or thicknesses of one cured layer.

6. The 3D printer (1) as claimed in claim 2, further comprising a Human Machine Interface (HMI) (14) electrically connected to the processor (10), wherein a plurality of machine parameters is sent to the processor (10) by using the HMI (14), and wherein the processor (10) is configured to read one-time table (101) based on the current temperature, the printing parameter, and the machine parameters.

7. The 3D printer (1) as claimed in claim 6, wherein the machine parameters include an illumination approach of the illumination unit (13), a power of the illumination unit (13), and a capacity of the tank (11); and wherein the illumination approach of the illumination unit (13) is a point-light illumination or an area-light illumination.

8. The 3D printer (1) as claimed in claim 2, further comprising a heat sink (15) provided on an outer surface of the tank (11) and electrically connected to the processor (10), and wherein in printing the 3D object, the processor (10) is configured to activate the heat sink (15) to dissipate heat in the liquid material (2).

9. A dynamical printing method of using a 3D printer (1) including a tank (11) for storing liquid material (2), a printing platform (12) disposed above a bottom of the tank (11), an illumination unit (13) disposed under the tank (11), and a processor (10) connected to the printing platform (12) and the illumination unit (13), comprising the steps of:
a) prior to printing, reading a time table (101) recorded with a plurality of relationships each between an illumination density and a plurality of waiting times as controlled by the processor (10);
b) obtaining slicing information of one of a plurality of cured layers of a 3D object in printing as controlled by the processor (10);
c) immersing the printing platform (12) in the liquid material (2), activating the illumination unit (13) to emit light toward inside of the tank (11), and creating a slicing object of the cured layer on the printing platform (12) as controlled by the processor (10) based on the slicing information;
d) calculating an illumination density of the cured layer based on the slicing information, wherein the processor (10) calculates an illumination area of the illumination unit (13) based on the slicing information of the cured layer, and calculates the illumination density based on the illumination area and a surface area of the tank (11);
e) searching the time table (101) to obtain a corresponding one of the waiting times based on the illumination density;
f) after creating the slicing object, causing the processor (10) to wait for the obtained waiting time to lapse; and
g) after the waiting time being lapsed, creating a slicing object of a next one of the cured layers by looping back to step b) and performing steps b) to f) as controlled by the processor (10).

10. The dynamical printing method as claimed in claim 9, wherein the processor (10) is stored with a plurality of time tables (101) each recorded with the plurality of relationships each between the illumination density and the waiting time in a plurality of different conditions, wherein in step a) the processor (10) obtains a current temperature and a printing parameter, and wherein the processor (10) reads a corresponding one of the time tables (101) based on the current temperature and the printing parameter.

11. The dynamical printing method as claimed in claim 10, wherein the current temperature is an internal temperature of the 3D printer (1), an ambient temperature, or an initial temperature of the liquid material (2); and wherein the printing parameter is a kind of the liquid material (2) or thicknesses of one cured layer.

12. The dynamical printing method as claimed in claim 10, wherein in step a) a plurality of machine parameters is sent to the processor (10), wherein the processor (10) reads a corresponding one of the time tables (101) based on the current temperature, the printing parameter, and the machine parameters, and wherein the machine parameters include an illumination approach of the illumination unit (13), a power of the illumination unit (13), and a capacity of the tank (11)..

13. The dynamical printing method as claimed in claim 9, further comprising a heat sink (15) provided on an outer surface of the tank (11) and electrically connected to the processor (10), and a sub-step a0) of activating the heat sink (15) to dissipate heat in the liquid material (2) as controlled by the processor (10).

## Patentansprüche

1. Ein 3D-Drucker (1), der in der Lage ist, die Druckzeit dynamisch anzupassen, umfassend:
einen Prozessor (10), auf dem eine Zeittabelle (101) gespeichert ist, die mit einer Vielzahl von Beziehungen jeweils zwischen einer Beleuchtungsdichte und einer Vielzahl von Wartezeiten belegt ist, wobei der Prozessor (10) so konfiguriert ist, dass er beim Drucken Schneideinformationen von einer von mehreren ausgehärteten Schichten eines 3D-Objekts erhält;
einen Tank (11), der für die Lagerung von flüssigem Material (2) konfiguriert ist;
eine Druckplattform (12), die über einem Boden des Tanks (11) angeordnet und elektrisch mit dem Prozessor (10) verbunden ist, so dass der Prozessor (10) so konfiguriert ist, dass er die Druckplattform (12) in das flüssige Material (2) eintaucht; und
eine Beleuchtungseinheit (13), die unter dem Tank (11) angeordnet und elektrisch mit dem Prozessor (10) verbunden ist, so dass die Beleuchtungseinheit (13) so konfiguriert ist, dass sie Licht in das Innere des Tanks (11) emittiert und ein Schneidobjekt aus einer ausgehärteten Schicht auf der Druckplattform (12) erzeugt wird, wie durch den Prozessor (10) auf der Grundlage der Schneideinformation gesteuert;
wobei der Prozessor (10) so konfiguriert ist, dass er einen Beleuchtungsbereich der Beleuchtungseinheit (13) auf der Grundlage der Schneideinformation der ausgehärteten Schicht berechnet, eine Beleuchtungsdichte der ausgehärteten Schicht auf der Grundlage des Beleuchtungsbereichs und eines Oberflächenbereichs des Tanks (11) berechnet, die Zeittabelle (101) durchsucht, um eine entsprechende der Wartezeiten auf der Grundlage der Beleuchtungsdichte zu erhalten, darauf wartet, dass die erhaltene Wartezeit nach der Erzeugung des Schneidobjekts einer ausgehärteten Schicht abläuft, und ein Schneidobjekt einer nächsten der ausgehärteten Schichten nach Ablauf der Wartezeit erzeugt.

2. 3D-Drucker (1) nach Anspruch 1, wobei auf dem Prozessor (10) eine Vielzahl von Zeittabellen (101) gespeichert ist, die jeweils mit der Vielzahl von Beziehungen jeweils zwischen der Beleuchtungsdichte und der Wartezeit in einer Vielzahl von verschiedenen Bedingungen aufgezeichnet sind, wobei der Prozessor (10) vor dem Drucken so konfiguriert ist, dass er eine aktuelle Temperatur und einen Druckparameter erhält und eine der Zeittabellen (101) auf der Grundlage deraktuellen Temperatur und des Druckparameters liest.

3. 3D-Drucker (1) nach Anspruch 2, wobei die aktuelle Temperatur eine Innentemperatur des 3D-Druckers (1) ist.

4. 3D-Drucker (1) nach Anspruch 2, ferner mit einer Mensch-Maschine-Schnittstelle (HMI) (14), die elektrisch mit dem Prozessor (10) verbunden ist, wobei die aktuelle Temperatur unter Verwendung der HMI (14) an den Prozessor (10) gesendet wird und wobei die aktuelle Temperatur entweder eine Umgebungstemperatur oder eine Anfangstemperatur des flüssigen Materials (2) ist.

5. 3D-Drucker (1) nach Anspruch 2, ferner mit einer Mensch-Maschine-Schnittstelle (HMI) (14), die elektrisch mit dem Prozessor (10) verbunden ist, wobei der Druckparameter unter Verwendung der HMI (14) an den Prozessor (10) gesendet wird, und wobei der Druckparameter eine Art des flüssigen Materials (2) oder die Dicke einer gehärteten Schicht ist.

6. 3D-Drucker (1) nach Anspruch 2, ferner mit einer Mensch-Maschine-Schnittstelle (Human-Machine-Interface, HMI) (14), die elektrisch mit dem Prozessor (10) verbunden ist, wobei eine Vielzahl von Maschinenparametern unter Verwendung der HMI (14) an den Prozessor (10) gesendet wird, und wobei der Prozessor (10) so konfiguriert ist, dass er eine Einmal-Tabelle (101) auf der Grundlage der aktuellen Temperatur, der Druckparameter und der Maschinenparameter liest.

7. 3D-Drucker (1) nach Anspruch 6, wobei die Maschinenparameter einen Beleuchtungsansatz der Beleuchtungseinheit (13), eine Leistung der Beleuchtungseinheit (13) und eine Kapazität des Tanks (11) umfassen; und wobei der Beleuchtungsansatz der Beleuchtungseinheit (13) eine Punktlichtbeleuchtung oder eine Flächenlichtbeleuchtung ist.

8. 3D-Drucker (1) nach Anspruch 2, der ferner eine Wärmesenke (15) aufweist, die an einer Außenfläche des Tanks (11) vorgesehen und elektrisch mit dem Prozessor (10) verbunden ist, und wobei beim Drucken des 3D-Objekts der Prozessor (10) so konfiguriert ist, dass er die Wärmesenke (15) aktiviert, um Wärme in dem flüssigen Material (2) abzuführen.

9. Dynamisches Druckverfahren des Verwendens eines 3D-Druckers (1) mit einem Tank (11) zum Lagern von flüssigem Material (2), einer Druckplattform (12), die über einem Boden des Tanks (11) angeordnet ist, einer Beleuchtungseinheit (13), die unter dem Tank (11) angeordnet ist, und einem Prozessor (10), der mit der Druckplattform (12) und der Beleuchtungseinheit (13) verbunden ist, mit folgenden Schritten
a) vor dem Drucken, Lesen einer Zeittabelle (101), die mit einer Vielzahl von Beziehungen jeweils zwischen einer Beleuchtungsdichte und einer Vielzahl von Wartezeiten, wie vom Prozessor (10) gesteuert, belegt ist;
b) Erhalten von Schneideinformationen einer von mehreren ausgehärteten Schichten eines 3D-Objekts beim Drucken, wie durch den Prozessor (10) gesteuert;
c) Eintauchen der Druckplattform (12) in das flüssige Material (2), Aktivieren der Beleuchtungseinheit (13), um Licht in das Innere des Tanks (11) zu emittieren, und Erzeugen eines Schneidobjekts der ausgehärteten Schicht auf der Druckplattform (12), wie durch den Prozessor (10) auf der Grundlage der Schneideinformation gesteuert;
d) Berechnen einer Beleuchtungsdichte der gehärteten Schicht auf der Grundlage der Schnittinformation, wobei der Prozessor (10) einen Beleuchtungsbereich der Beleuchtungseinheit (13) auf der Grundlage der Schnittinformation der gehärteten Schicht berechnet und die Beleuchtungsdichte auf der Grundlage des Beleuchtungsbereichs und eines Oberflächenbereichs des Tanks (11) berechnet;
e) Durchsuchen des Zeitplans (101), um eine entsprechende der Wartezeiten auf der Grundlage der Beleuchtungsdichte zu erhalten;
f) nach dem Erstellen des Schneidobjekts, Veranlassen des Prozessors (10), auf den Ablauf der erhaltenen Wartezeit zu warten; und
g) nachdem die Wartezeit abgelaufen ist, Erzeugen eines Schneidobjekts einer nächsten der gehärteten Schichten durch Zurückschleifen zu Schritt b) und Ausführen der Schritte b) bis f) unter der Kontrolle des Prozessors (10).

10. Dynamisches Druckverfahren nach Anspruch 9, wobei auf dem Prozessor (10) eine Vielzahl von Zeittabellen (101) gespeichert ist, die jeweils mit der Vielzahl von Beziehungen jeweils zwischen der Beleuchtungsdichte und der Wartezeit in einer Vielzahl von verschiedenen Bedingungen aufgezeichnet sind, wobei in Schritt a) der Prozessor (10) eine aktuelle Temperatur und einen Druckparameter erhält, und wobei der Prozessor (10) eine entsprechende der Zeittabellen (101) auf der Grundlage der aktuellen Temperatur und des Druckparameters liest.

11. Dynamisches Druckverfahren nach Anspruch 10, wobei die aktuelle Temperatur eine Innentemperatur des 3D-Druckers (1), eine Umgebungstemperatur oder eine Anfangstemperatur des flüssigen Materials (2) ist; und wobei der Druckparameter eine Art des flüssigen Materials (2) oder die Dicke einer gehärteten Schicht ist.

12. Dynamisches Druckverfahren nach Anspruch 10, wobei in Schritt a) eine Vielzahl von Maschinenparametern an den Prozessor (10) gesendet wird, wobei der Prozessor (10) eine entsprechende der Zeittabellen (101) auf der Grundlage der aktuellen Temperatur, des Druckparameters und der Maschinenparameter liest, und wobei die Maschinenparameter einen Beleuchtungsansatz der Beleuchtungseinheit (13), eine Leistung der Beleuchtungseinheit (13) und eine Kapazität des Tanks (11) umfassen.

13. Dynamisches Druckverfahren nach Anspruch 9, ferner mit einer Wärmesenke (15), die an einer Außenfläche des Tanks (11) vorgesehen und elektrisch mit dem Prozessor (10) verbunden ist, und einem Unterschritt a0) der Aktivierung der Wärmesenke (15), um Wärme in dem flüssigen Material (2), wie durch den Prozessor (10) gesteuert, abzuführen.

## Revendications

1. Une imprimante 3D (1) capable d'ajuster dynamiquement le temps d'impression comprenant:
un processeur (10) stocké avec une table de temps (101) enregistrée avec une pluralité de relations chacune entre une densité d'éclairage et une pluralité de temps d'attente, dans lequel le processeur (10) est configuré pour obtenir des informations de découpage d'une des multiples couches durcies d'un objet 3D lors de l'impression;
un réservoir (11) configuré pour stocker un matériau liquide (2);
une plate-forme d'impression (12) disposée au-dessus d'un fond du réservoir (11) et connectée électriquement au processeur (10) de sorte que le processeur (10) est configuré pour immerger la plate-forme d'impression (12) dans le matériau liquide (2); et
une unité d'éclairage (13) disposée sous le réservoir (11) et connectée électriquement au processeur (10) de sorte que l'unité d'éclairage (13) est configurée pour émettre de la lumière vers l'intérieur du réservoir (11) et un objet de découpe d'une couche durcie est créée sur la plate-forme d'impression (12) sous la commande du processeur (10) sur la base des informations de découpage;
dans lequel le processeur (10) est configuré pour calculer une surface d'éclairage de l'unité d'éclairage (13) sur la base des informations de découpage de la couche durcie, pour calculer une densité d'éclairage de la couche durcie sur la base de la surface d'éclairage et d'une surface de réservoir (11), de rechercher dans la table de temps (101) pour obtenir un temps correspondant aux temps d'attente sur la base de la densité d'éclairage, et d'attendre l'écoulement du temps d'attente à la suite de la création de l'objet de découpe de l'une des couches durcies, et de créer un objet de découpe de la suivante des couches durcies à la suite de l'écoulement du temps d'attente.

2. L'imprimante 3D (1) telle que revendiquée dans la revendication 1, dans laquelle le processeur (10) est stocké avec une pluralité de tables de temps (101), chacune étant enregistrée avec la pluralité de relations, chacune entre la densité d'éclairage et le temps d'attente dans une pluralité de conditions, dans lequel, avant l'impression, le processeur (10) est configuré pour obtenir une température courante et un paramètre d'impression, et de lire une des tables de temps (101) sur la base de la température courante et du paramètre d'impression.

3. L'imprimante 3D (1) telle que revendiquée dans la revendication 2, dans laquelle la température courante est une température interne de l'imprimante 3D (1).

4. L'imprimante 3D (1) telle que revendiquée dans la revendication 2, comprenant en outre une interface homme-machine (IHM) (14) connectée électriquement au processeur (10), dans laquelle la température actuelle est envoyée au processeur (10) en utilisant l'IHM (14), et dans lequel la température courante est soit une température ambiante soit une température initiale du matériau liquide (2).

5. L'imprimante 3D (1) telle que revendiquée dans la revendication 3, comprenant en outre une interface homme-machine (IHM) (14) connectée électriquement au processeur (10), dans laquelle le paramètre d'impression est envoyé au processeur (10) en utilisant l'IHM (14), et dans lequel le paramètre d'impression est une sorte de matériau liquide (2) ou des épaisseurs d'une couche durcie.

6. L'imprimante 3D (1) telle que revendiquée dans la revendication 2, comprenant en outre une interface homme-machine (IHM) (14) connectée électriquement au processeur (10), dans laquelle une pluralité de paramètres d'impression est transmise au processeur (10) en utilisant l'IHM (14), et dans laquelle le processeur est configuré pour lire une table à lecture unique (101) sur la base de la température courante, du paramètre d'impression, et des paramètres de machine.

7. L'imprimante 3D (1) telle que revendiquée dans la revendication 6, dans laquelle les paramètres de la machine comprennent une approche d'éclairage de l'unité d'éclairage (13), une puissance de l'unité d'éclairage (13) et une capacité du réservoir (11); et dans laquelle l'approche d'éclairage de l'unité d'éclairage (13) est un éclairage ponctuel ou un éclairage surfacique.

8. L'imprimante 3D (1) telle que revendiquée dans la revendication 3, comprenant en outre un dissipateur thermique (15) prévu sur une surface extérieure du réservoir (11) et connecté électriquement au processeur (10), et dans lequel lors de l'impression de l'objet 3D, le le processeur (10) est configuré pour activer le dissipateur thermique (15) pour dissiper la chaleur dans le matériau liquide (2).

9. Un procédé d'impression dynamique utilisant une imprimante 3D (1) comprenant un réservoir (11) pour stocker du matériau liquide (2), une plate-forme d'impression (12) disposée au-dessus du fond du réservoir (11), une unité d'éclairage (13) disposée sous le réservoir (11), et un processeur (10) connecté à la plate-forme d'impression (12) et à l'unité d'éclairage (13), comprenant les étapes de:
a) avant l'impression, la lecture d'une table de temps (101) enregistrée avec une pluralité de relations chacune entre une densité d'éclairage et une pluralité de temps d'attente sous la commande du processeur (10);
b) l'obtention d'informations de découpage en tranches d'une parmi une pluralité de couches durcies d'un objet 3D lors de l'impression commandée par le processeur (10);
c) l'immersion de la plate-forme d'impression (12) dans le matériau liquide (2), activant l'unité d'éclairage (13) pour émettre de la lumière vers l'intérieur du réservoir (11) et créer un objet de découpe de la couche durcie sur la plate-forme d'impression (12) telle que commandée par le processeur (10) sur la base des informations de découpage;
d) calculer une densité d'éclairage de la couche durcie sur la base des informations de découpage, dans lequel le processeur (10) calcule une surface d'éclairage de l'unité d'éclairage (13) sur la base de l'information de découpe de la couche durcie, et calcule la densité d'éclairage sur la base de la surface d'éclairage et d'une surface du réservoir ;
e) rechercher la table de temps (101) pour obtenir un temps d'attente correspondant à la densité d'éclairage;
f) après la création de l'objet de découpe, amener le processeur (10) à attendre que le temps d'attente obtenu expire; et
g) après l'écoulement du temps d'attente, créer un objet de découpe d'une des couches durcies suivantes en bouclant à l'étape b) et en exécutant les étapes b) à f) commandées par le processeur (10).

10. Le procédé d'impression dynamique tel que revendiqué dans la revendication 9, dans lequel le processeur est stocké avec une pluralité de tables de temps (101) chacune enregistrée avec la pluralité de relations, chacune entre la tension d'éclairage et le temps d'attente au sein d'une pluralité de conditions différentes, dans lequel dans l'étape a) le processeur (10) obtient une température courante et un paramètre d'impression, et dans lequel le processeur (10) lire une table correspondante parmi les tables de temps (101) sur la base de la température courante et du paramètre d'impression.

11. Le procédé d'impression dynamique tel que revendiqué dans la revendication 10, dans lequel la température courante est une température interne de l'imprimante 3D (1), une température ambiante, ou une température initiale du matériau liquide (2) ; et dans lequel le paramètre d'impression est le type de matériau liquide (2) ou l'épaisseur d'une couche durcie.

12. Le procédé d'impression dynamique tel que revendiqué dans la revendication 10, dans lequel à l'étape a), une pluralité de paramètres machines est transmise au processeur (10), dans lequel le processeur (10) lit une table correspondante parmi les tables de temps (101) sur la base de la température courante, le paramètre d'impression, et les paramètres machines, et dans lequel les paramètres machine comportent une approche d'éclairage de l'unité d'éclairage (13), une puissance de l'unité d'éclairage (13), et une capacité du réservoir (11).

13. Le procédé d'impression dynamique tel que revendiqué dans la revendication 12, comprenant en outre un dissipateur thermique (15) prévu sur une surface extérieure du réservoir (11) et connecté électriquement au processeur (10), et une sous-étape a0) d'activation du dissipateur thermique (15) pour dissiper la chaleur dans le matériau liquide (2) tel que commandé par le processeur (10).
